Europäisches Patentamt

European Patent Office

Office européen des brevets

(11) Veröffentlichungsnummer: **0 201 756**

**A2**

(12) **EUROPÄISCHE PATENTANMELDUNG**

(21) Anmeldenummer: **86105394.0**

(22) Anmeldetag: **18.04.86**

(51) Int. Cl.⁴: **B 23 B 33/00**

(30) Priorität: **15.05.85 DE 3517633**

(43) Veröffentlichungstag der Anmeldung:
**20.11.86 Patentblatt 86/47**

(84) Benannte Vertragsstaaten:
**CH DE FR GB IT LI SE**

(71) Anmelder: **Sandvik Kosta GmbH**
**Postfach 1209**
**D-7253 Renningen 2(DE)**

(71) Anmelder: **SMW Schneider & Weisshaupt GmbH**
**Wiesentalstrasse 28**
**D-7996 Meckenþeuren(DE)**

(72) Erfinder: **Schmid, Herbert, Ing. grad.**
**Dieselstrasse 13**
**D-7253 Renningen 2(DE)**

(72) Erfinder: **Hiestand, Karl**
**Mühlweg 2**
**D-7798 Pfullendorf(DE)**

(74) Vertreter: **Engelhardt, Guido, Dipl.-Ing.**
**Montafonstrasse 35 Postfach 1350**
**D-7990 Friedrichshafen 1(DE)**

(54) Stirnmitnehmer.

㉗ Bei einem Stirnmitnehmer (11) zum Zentrieren und Mitnehmen von einem auf einer Drehmaschine (1) einzuspannenden Werkstück (4), der einen mit einer Körnerspitze (14) und mehreren verschiebbar angeordneten, von einem Druckglied (19) über eine Druckplatte (21) anpreßbare Mitnehmerbolzen (16) versehenen Träger (12) aufweist, ist die Druckplatte (21) in Achsrichtung (A) des Trägers (12) pendelnd gehalten und die den Mitnehmerbolzen (16) zugeordneten Teile (Arme 25) der Druckplatte (21) sind elastisch verformbar ausgebildet.

Dadurch werden Planflächenfehler des einzuspannenden Werkstückes (4) selbsttätig bei geringem Bauaufwand ausgeglichen.

FIG. 1

SANDVIK KOSTA GmbH

7253 Renningen 2

und

SMW Schneider & Weißhaupt GmbH
7996 Meckenbeuren


Stirnmitnehmer


Die Erfindung bezieht sich auf einen Stirnmitnehmer zur Zentrierung und Mitnahme von auf einer Drehmaschine eingespannten Werkstücken, der aus einem mit dieser verbundenen Träger, einer an diesem abgestützten Körnerspitze und mehreren gleichmäßig über den Umfang verteilt angeordneten Mitnehmerbolzen, die verschiebbar in dem Träger eingesetzt und mittels einer zentrisch von einem Druckglied beaufschlagbaren Druckplatte stirnseitig gegen das einzuspannende Werkstück preßbar sind.

Ein Stirnmitnehmer dieser Art ist durch die DE-OS 34 00 082 bekannt. Bei dieser Ausgestaltung ist die Druckplatte als ein starres Bauteil ausgebildet und zwischen einer Kolbenstange eines in einem Hydraulik-Zylinder angeordneten Betätigungskolbens und den Mitnehmerbolzen eingespannt. Da das an der Druckplatte anliegende Ende der Kolbenstange konvex gekrümmt und jedem Mitnehmerbolzen eine sich an diesem und dem Träger abstützenden Rückstellfeder zugeordnet ist, kann sich die Druckplatte, sofern der Träger mit nur zwei oder

./.

drei Mitnehmerbolzen bestückt ist, schräg stellen,
so daß Planflächenfehler des Werkstückes, obwohl
dies nicht Aufgabe dieses bekannten Stirnmitnehmers
ist, bedingt auszugleichen sind. Bei mit mehr als
drei Mitnehmerbolzen versehenen Stirnmitnehmern ist
auf diese Weise jedoch ein Ausgleich von Planflächendifferenzen des einzuspannenden Werkstückes nicht
möglich. Des weiteren ist eine Führung und somit
eine definierte Lage der Druckplatte nicht vorgesehen,
diese kann daher bei einer Rückführung des Beätigungskolbens leicht ihre Lage ändern. Auch ist beim Einspannen eines Werkstückes die Kraft der Rückstellfedern
zu überwinden, die Einspannkraft wird dadurch gemindert.

Aufgabe der Erfindung ist es demnach, den Stirnmitnehmer der vorgenannten Art in der Weise zu verbessern,
daß unabhängig von der Anzahl der in den Träger eingesetzten Mitnehmerbolzen selbsttätig ein Ausgleich
von Planflächentoleranzen des einzuspannenden Werkstückes vorzunehmen ist. Der dazu erforderliche Bauaufwand soll gering gehalten werden, dennoch soll gewährleistet sein, daß die über das Druckglied eingeleitete
Spannkraft ohne Spannkraftabnahme auf das Werkstück
übertragbar ist und daß stets eine zuverlässige Einspannung vorgenommen werden kann.

Gemäß der Erfindung wird dies dadurch erreicht, daß
die Druckplatte in Achsrichtung des Trägers pendelnd
gehalten ist und daß die den Mitnehmerbolzen zugeordneten Teile der Druckplatte elastisch verformbar
ausgebildet sind.

Angebracht ist es hierbei, die Druckplatte in einer
zylindrischen Ausnehmung des Trägers einzusetzen, auf
ihrer Außenmantelfläche konvex gekrümmt auszubilden und

./.

somit an der zylindrischen Innenfläche der Ausnehmung pendelnd abzustützen. Die Druckplatte kann aber auch zusätzlich oder gesondert über ein Kugelgelenk zentrisch mit dem Druckglied verbunden werden, wobei das Kugelgelenk durch einen an dem Druckglied angeformten Kugelkopf und eine in die Druckplatte eingearbeitete kalottenförmig ausgebildete Ausnehmung bestehen sollte, in der der Kugelkopf gehalten ist.

Die elastisch verformbaren Teile der Druckplatte können in einfacher Ausgestaltung durch von einer Nabe radial nach außen abstehende Arme gebildet werden, es ist aber auch möglich, diese Teile als in Achsrichtung federnde Segmente auszubilden, in dem in die Druckplatte zwischen den Anlageflächen der Mitnehmerbolzen radial gerichtete Schlitze oder Freisparungen eingearbeitet werden.

Nach einer andersartigen Ausgestaltung können die elastisch verformbaren Teile der Druckplatte auch durch eine in diese eingesetzte Einlage aus hydroplastischem Werkstoff gebildet werden, wobei die Einlage in den einzelnen Mitnehmerbolzen zugeordneten Bereichen stirnseitig in die Druckplatte eingearbeitete Ausnehmungen oder in einer auf der den Mitnehmerbolzen zugekehrten Seite der Druckplatte eingearbeiteten umlaufenden Ausnehmung einzusetzen ist, die mittels einer Abdeckplatte und in diesen gehaltenen Kugeln oder Bolzen als Zwischenglieder abgedichtet sind.

Zweckmäßig ist es des weiteren, die Druckplatte und/oder die Mitnehmerbolzen mit konvex gekrümmt ausgebildeten Anlageflächen zu versehen.

./.

Auch können die Mitnehmerbolzen jeweils über ein Zwischenglied an den elastisch verformbaren Teilen der Druckplatte abgestützt sein. Die Zwischenglieder sollten hierbei jeweils als Kugel oder als ein mit an den Enden angeformten Kugelköpfen versehener Bolzen ausgebildet sein.

Vorteilhaft ist es ferner, die Druckplatte mit in zwei Ebenen axial hintereinander angeordneten elastisch verformbaren Teilen zu versehen, die gegeneinander versetzt angeordnet sind, und die Mitnehmerbolzen jeweils mit einem in diesem eingesetzten elastisch verformbaren Zwischenstück auszustatten.

Bei auf unterschiedlichen Durchmessern in den Träger eingesetzten Mitnehmerbolzen ist es angebracht, diese über ein Ausgleichselement und ein als Kugel ausgebildetes Zwischenglied an der gemeinsamen Druckscheibe abzustützen.

Der gemäß der Erfindung ausgebildete Stirnmitnehmer ermöglicht es, auf einfache Weise selbsttätig auch größere Planflächentoleranzen eines Werkstückes, die sich zwangsläufig, z. B. beim Absägen ergeben, auszugleichen, und zwar unabhängig von der Anzahl der in einen Träger eingesetzten Mitnehmerbolzen. Wird nämlich die Druckplatte pendelnd gehalten und werden deren den Mitnehmerbolzen zugeordneten Teile elastisch verformbar ausgebildet, kann jeder Mitnehmerbolzen somit im Bedarfsfall eine Ausgleichsbewegung ausführen. Selbst Werkstücke mit unebenen oder schräg verlaufenden Stirnflächen können demnach, ohne daß diese vorab zu bearbeiten sind, zuverlässig mit dem vorschlagsgemäß ausgebildeten Stirnmitnehmer eingespannt werden.

./.

Der Bauaufwand, der erforderlich ist, um dies zu ermöglichen, ist äußerst gering, da lediglich die Druckplatte entsprechend auszubilden ist. Des weiteren ist ein Spannkraftverlust nicht in Kauf zu nehmen, vielmehr tritt bei Werkstücken, bei denen Planflächenfehler auszugleichen sind, eine Spannkrafterhöhung ein, da die jeweiligen Mitnehmerbolzen, die eine Ausgleichsbewegung ausführen, mit der Vorspannkraft des elastisch verformbaren Teils der Druckplatte zusätzlich gegen das Werkstück gepreßt werden. Eine vielseitige vorteilhafte Verwendbarkeit des vorschlagsgemäßen Stirnmitnehmers ist somit gegeben.

In der Zeichnung sind einige Ausführungsbeispiele des gemäß der Erfindung ausgebildeten Stirnmitnehmers dargestellt, die nachfolgend im einzelnen erläutert sind. Hierbei zeigt:

Fig. 1    einen auf einer Drehmaschine angeordneten Stirnmitnehmer im Axialschnitt mit einem eingespannten Werkstück,

Fig. 2    die bei dem Stirnmitnehmer nach Fig. 1 vorgesehene Druckplatte in Vorderansicht,

Fig. 3    eine andersartige Ausgestaltung einer bei dem Stirnmitnehmer nach Fig. 1 verwendbaren Druckplatte, in Vorderansicht,

Fig. 4    die Druckplatte nach Fig. 3 in einem Schnitt nach der Linie IV - IV der Fig. 3 und

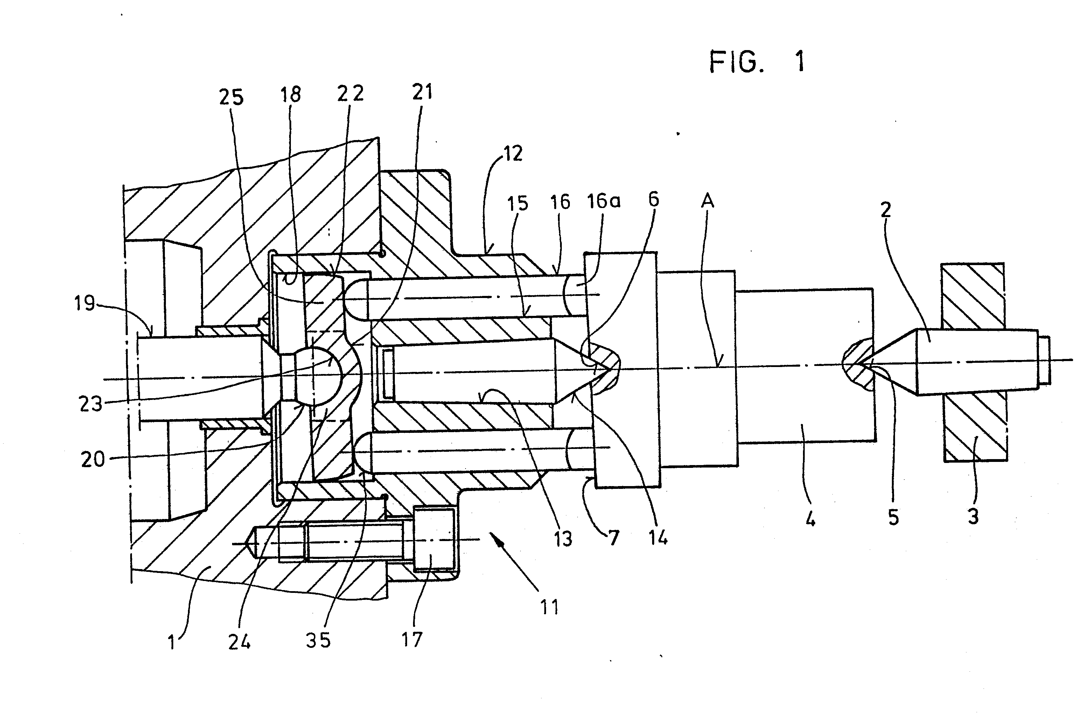

Fig. 5 bis 8
          andersartige Ausgestaltungen des Stirnmitnehmers nach Fig. 1, jeweils in einem Axialschnitt.

Der in Fig. 1 dargestellte und mit 11 bezeichnete Stirnmitnehmer dient zur Zentrierung und drehfesten Einspannung zwischen Spitzen eines Werkstückes 4 auf einer Drehmaschine 1 und besteht aus einem an dieser mittels Schrauben 17 befestigten Träger 12, einer in einer zentrischen kegelig ausgebildeten Bohrung 13 eingesetzten und an dem Träger 12 abgestützten Körnerspitze 14 sowie mehreren gleichmäßig über den Umfang verteilt angeordneten in Bohrungen 15 axial verschiebbar gehaltenen Mitnehmerbolzen 16 und einer in einer Ausnehmung 18 des Trägers 12 angeordneten Druckplatte 21. Auf die Druckplatte 21 wirkt hierbei zentrisch ein Druckglied 19, beispielsweise die Kolbenstange eines von Druckmittel beaufschlagbaren Kolbens ein, so daß die Mitnehmerbolzen 16 mit ihren Schneiden 16 a gegen die Stirnfläche 7 des Werkstückes 4 preßbar sind. Das mit Zentrierbohrungen 5 und 6 versehene Werkstück 4 ist auf einer in einem Lagergehäuse 3 eingesetzten Spitze 2 als Gegenlager drehbar gehalten und wird bei Rotation des Stirnmitnehmers 11 von diesem mitgenommen, so daß eine Bearbeitung des Werkstückes 4 über dessen gesamte axiale Länge in einem Arbeitsgang möglich ist.

Bei dem Stirnmitnehmer 11 ist die Druckplatte 21 in Achsrichtung A der Drehmaschine 1 pendelnd gehalten. Um dies zu bewerkstelligen, ist das Ende des Druckgliedes 19 als Kugelkopf 20 ausgebildet und in die Druckplatte 21 ist eine diesen aufnehmende kalottenförmige Ausnehmung 23 eingearbeitet, so daß ein Kugelgelenk gebildet ist. Des weiteren ist die Außenmantelfläche 22 der Druckplatte 21 konvex gekrümmt und liegt an der zylindrischen Innenfläche der Ausnehmung 18 an, die Druckplatte 21 kann somit um das Zentrum des Kugelkopfes 20 pendeln.

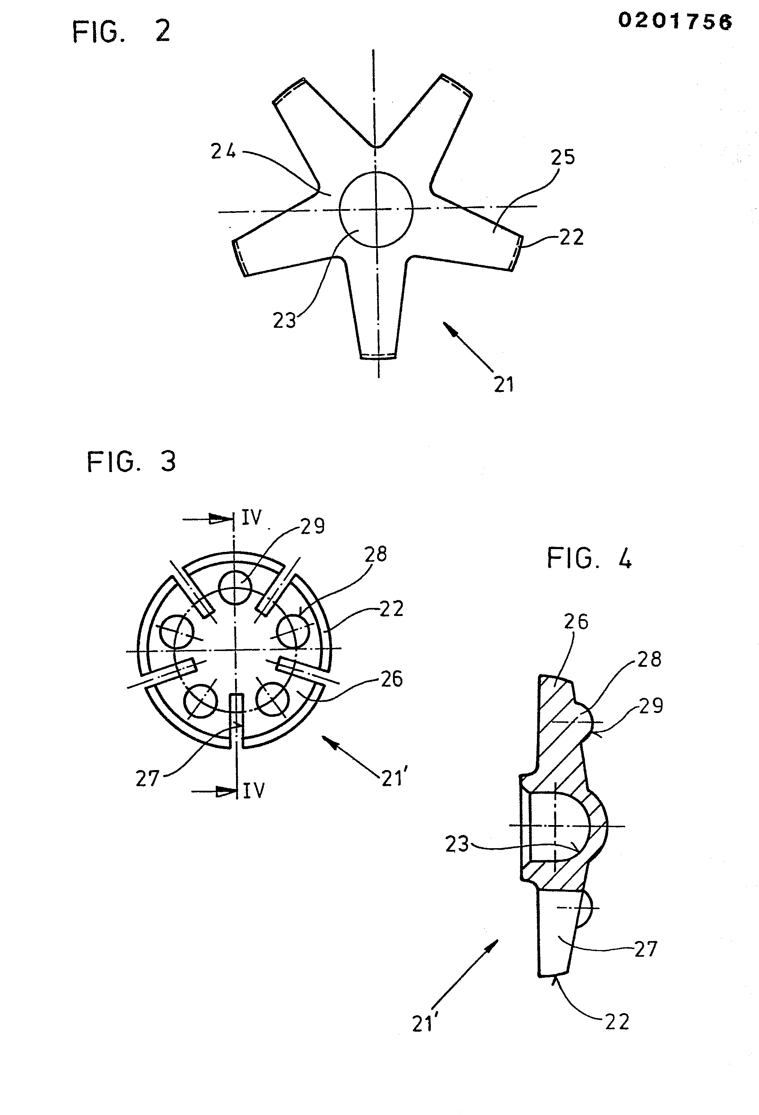

Des weiteren ist die Druckplatte 21 in den den Mitnehmerbolzen 16 zugeordneten Teilen elastisch verformbar ausgebildet. Bei dem Ausführungsbeispiel nach den Fig. 1 und 2 sind, um dies zu bewerkstelligen, an einer Nabe 24 radial nach außen abstehende Arme 25 angeformt, an denen die Mitnehmerbolzen 16 mit einer an diesen jeweils angearbeiteten konvex gekrümmten Fläche 35 anliegen. Die Mitnehmerbolzen 16 können somit unabhängig voneinander Axialbewegungen ausführen, so daß auf diese Weise, da die Arme 25 der Druckplatte 21 mehr oder weniger zurückweichen können, Planflächenfehler des Werkstückes 4 selbsttätig auszugleichen sind, ohne daß dessen Einspannung beeinträchtigt wird. Die Druckplatte 21 ist dabei zentrisch und in ihrem äußeren Bereich geführt, ein Verkanten ist demnach ausgeschlossen. Auch wird bei Schwenkbewegungen der Arme 25 die Anlage der Mitnehmerbolzen 16 an diesen, da diese mit einer konvex gekrümmten Anlagefläche 35 ausgestattet sind, nicht beeinträchtigt, Schwenkbewegungen werden vielmehr ebenfalls ausgeglichen.

Sofern die Stirnfläche 7 des Werkstückes 4 Unebenheiten aufweist oder nicht achssenkrecht verläuft, werden die einzelnen Mitnehmerbolzen 16 unabhängig voneinander, da die Arme 25 der Druckplatte 21 elastisch verformbar sind und somit ausweichen können, entsprechend zurückgedrückt, Planflächenfehler des Werkstückes 4 werden dadurch, ohne daß die Stirnfläche 7 bearbeitet werden muß, ausgeglichen.

Bei der in den Fig. 3 und 4 gezeigten Druckplatte 21' sind elastisch verformbare Segmente 26 vorgesehen, die mit den Mitnehmerbolzen 16 zusammenwirken. Die in Achsrichtung A federnden Segmente 26 sind hierbei durch radial gerichtete Schlitze 27 geschaffen, die zwischen den Anlageflächen 29 der Mitnehmerbolzen 16 in die Druckplatte 21' eingearbeitet sind. Des weiteren sind an der Druckplatte 21' konvex gekrümmte Nocken 28 angeformt, durch die somit gewölbte Anlageflächen 29 gebildet sind.

./.

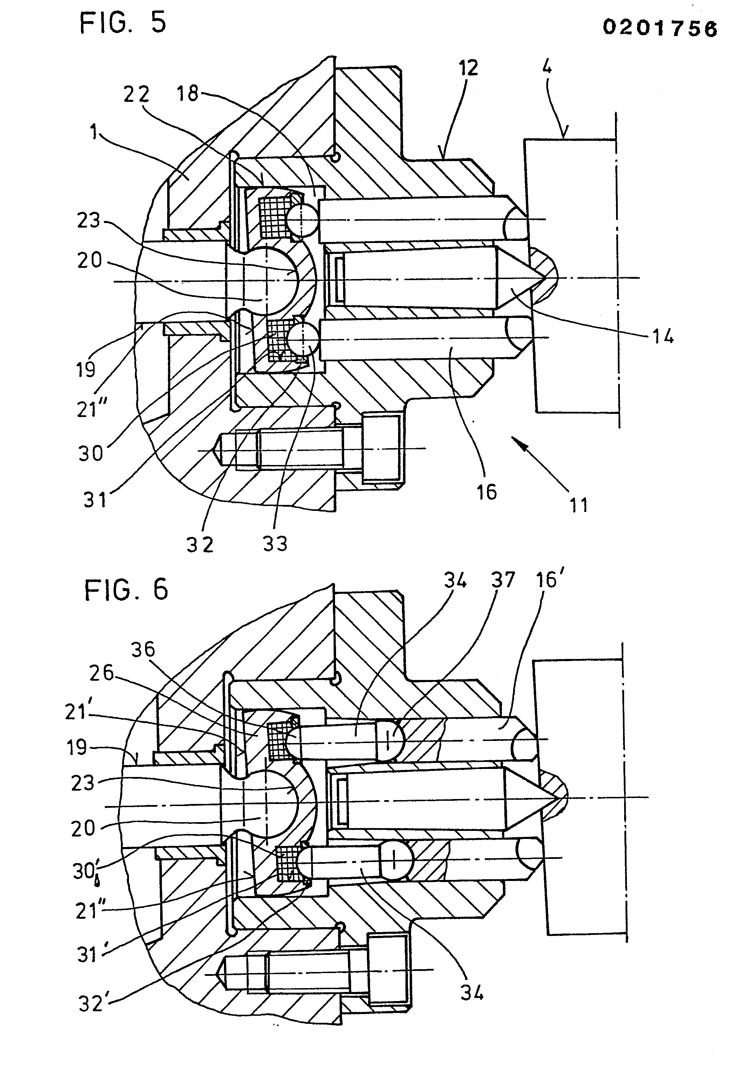

Bei dem Ausführungsbeispiel nach Fig. 5 sind in die Druckplatte 21'' entsprechend der Anordnung der Mitnehmerbolzen 16 Ausnehmungen 31 eingearbeitet, die mit einer Einlage 30 aus hydroplastischem Werkstoff als elastisch verformbare Teile der Druckplatte 21'' ausgefüllt sind. Mittels einer Abdeckplatte 32 und einer in dieser gehaltenen Kugel 33 als Zwischenglieder sind die Ausnehmungen 31 verschlossen.

Gemäß Fig. 6 sind Bolzen 34 als Zwischenglieder vorgesehen, die mit Kugelköpfen 36 bzw. 37 an der mit Segmenten 26 versehenen Druckplatte 21' bzw. an der mit einer Einlage 30' aus hydroplastischem Werkstoff ausgestatteten Druckplatte 21'' und den Mitnehmerbolzen 16' anliegen. Die Einlage 30' ist hierbei in einer umlaufenden Ausnehmung 31' eingebracht, die durch eine ringförmige Platte 32' und die Bolzen 34 verschlossen ist.

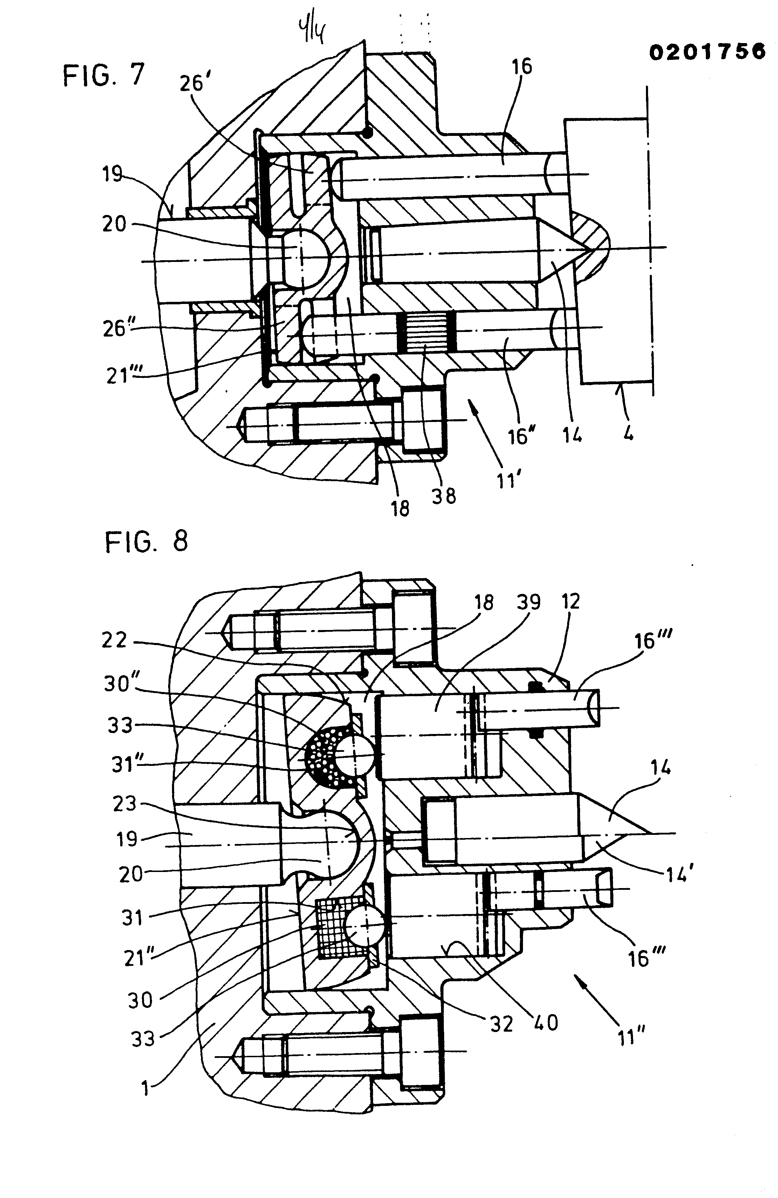

Der Stirnmitnehmer 11' nach Fig. 7 ist mit einer Druckplatte 21''' ausgestattet, die mit in zwei Ebenen axial hintereinander angeordneten elastisch verformbaren Segmenten 26' und 26'', die gegeneinander versetzt sind, versehen ist. Auf diese Weise können die Segmente 26', 26'' groß gestaltet bzw. es kann eine Vielzahl von Mitnehmerbolzen 16, 16'' vorgesehen werden. In die Mitnehmerbolzen 16'' ist hierbei jeweils ein Zwischenstück 38 als Energiespeicher eingesetzt, um die Anpreßkraft bei einem evtl. Abfall der Spannkraft aufrechterhalten zu können.

Bei dem Stirnmitnehmer 11'' nach Fig. 8 sind die Mitnehmerbolzen 16''' auf unterschiedlichen Durchmessern angeordnet, so daß unterschiedliche Körnerspitzen 14 und 14' verwendet werden können und auch Werkstücke unterschiedlicher Durchmesser einzuspannen sind. Um aber alle

./.

Mitnehmerbolzen 16''' durch eine diesen gemeinsame
Druckplatte 21'' gegen das einzuspannende Werkstück
pressen zu können, sind in Bohrungen 40 des Trägers
12 Ausgleichselemente 39 eingesetzt, auf die die
in der Abdeckplatte 32 gehaltenen Kugeln 33 einwirken.
Als elastisch verformbare Teile der Druckplatte 21''
ist wiederum eine Einlage 30 bzw. 30'' aus hydroplastischem Werkstoff vorgesehen, die in den unterschiedlich gestalteten Ausnehmungen 31 bzw. 31''
eingesetzt ist.

21. März 1985   e-1
A 7819

SANDVIK KOSTA GmbH

7253 Renningen 2

und

SMW Schneider & Weißhaupt GmbH

7996 Meckenbeuren

P a t e n t a n s p r ü c h e :

1. Stirnmitnehmer zum Zentrieren und Mitnehmen von auf einer Drehmaschine eingespannten Werkstücken, mit einem mit dieser verbundenen Träger, an dem eine Körnerspitze abgestützt ist und mehrere gleichmäßig über den Umfang verteilt angeordnete Mitnehmerbolzen verschiebbar eingesetzt sind, die mittels einer zentrisch von einem Druckglied beaufschlagbaren Druckplatte stirnseitig gegen das einzuspannende Werkstück preßbar sind,

d a d u r c h   g e k e n n z e i c h n e t ,

daß die Druckplatte (21; 21'; 21'') in Achsrichtung (A) des Trägers (12) pendelnd gehalten ist und daß die den Mitnehmerbolzen (16; 16'; 16'') zugeordneten Teile (Arme 25; Segmente 26; Einlage 30) der Druckplatte (21; 21'; 21'') elastisch verformbar ausgebildet sind.

./.

2. Stirnmitnehmer nach Anspruch 1,

   d a d u r c h   g e k e n n z e i c h n e t ,

   daß die Druckplatte (21; 21'; 21'') in einer zylindrischen Ausnehmung (18) des Trägers (12) eingesetzt, auf ihrer Außenmantelfläche (22) konvex gekrümmt ausgebildet und an der zylindrischen Innenfläche der Ausnehmung (18) pendelnd abgestützt ist.

3. Stirnmitnehmer nach Anspruch 1 oder 2,

   d a d u r c h   g e k e n n z e i c h n e t ,

   daß die Druckplatte (21; 21'; 21'') über ein Kugelgelenk (20, 23) zentrisch mit dem Druckglied (19) verbunden ist.

4. Stirnmitnehmer nach Anspruch 3,

   d a d u r c h   g e k e n n z e i c h n e t ,

   daß das Kugelgelenk (20, 23) aus einem an dem Druckglied (19) angeformten Kugelkopf (20) und einer in die Druckplatte (21; 21'; 21'') eingearbeiteten kalottenförmig ausgebildeten Ausnehmung (23) besteht, in der der Kugelkopf (20) gehalten ist.

5. Stirnmitnehmer nach einem oder mehreren der Ansprüche 1 bis 4,

   d a d u r c h   g e k e n n z e i c h n e t ,

   daß die elastisch verformbaren Teile der Druckplatte (21) durch von einer Nabe (24) radial nach außen abstehende Arme (25) gebildet sind.

./.

- 3 -

0201756

6. Stirnmitnehmer nach einem oder mehreren der
Ansprüche 1 bis 4,

d a d u r c h   g e k e n n z e i c h n e t ,

daß die elastisch verformbaren Teile der Druckplatte
(21') als in Achsrichtung federnde Segmente (26) ausgebildet sind, in dem in die Druckplatte (21')
zwischen den Anlageflächen (29) der Mitnehmerbolzen
(16) radial gerichtete Schlitze (27) oder Freisparungen eingearbeitet sind.

7. Stirnmitnehmer nach einem oder mehreren der
Ansprüche 1 bis 4,

d a d u r c h   g e k e n n z e i c h n e t ,

daß die elastisch verformbaren Teile der Druckplatte
(21'') durch eine in diese eingesetzte Einlage (30)
aus hydroplastischem Werkstoff gebildet ist.

8. Stirnmitnehmer nach Anspruch 7,

d a d u r c h   g e k e n n z e i c h n e t ,

daß die Einlage (30) in den einzelnen Mitnehmerbolzen
(16) zugeordneten Bereichen stirnseitig in die Druckplatte (21'') eingearbeitete Ausnehmungen (31) eingesetzt ist,  die jeweils mittels einer in einer
Abdeckplatte (32) gehaltenen Kugel (33) oder einem
Bolzen (34) als Zwischenglied abgedichtet sind.

9. Stirnmitnehmer nach Anspruch 7,

d a d u r c h   g e k e n n z e i c h n e t ,

./.

daß die Einlage (30') in einer auf derden Mitnehmerbolzen (16) zugekehrten Seite der Druckplatte
(21'') eingearbeiteten umlaufenden Ausnehmung (31')
eingesetzt ist, die mittels einer Abdeckplatte (32')
und in diesen gehaltenen Kugeln oder Bolzen (34)
als Zwischenglieder abgedichtet ist.

10. Stirnmitnehmer nach einem oder mehreren der
Ansprüche 1 bis 9,

d a d u r c h   g e k e n n z e i c h n e t ,

daß die Druckplatte (21') und/oder die Mitnehmerbolzen
(16) mit konvex gekrümmt ausgebildeten Anlageflächen
(29, 35) versehen sind.

11. Stirnmitnehmer nach einem oder mehreren der
Ansprüche 1 bis 9 ,

d a d u r c h   g e k e n n z e i c h n e t ,

daß die Mitnehmerbolzen (16, 16') jeweils über ein
Zwischenglied (33, 34) an den elastisch verformbaren
Teilen (Einlage 30, 30'; Arme 25) der Druckplatte
(21') abgestützt sind.

12. Stirnmitnehmer nach Anspruch 11,

d a d u r c h   g e k e n n z e i c h n e t ,

daß die Zwischenglieder jeweils als Kugel (33) oder
als ein mit an den Enden angeformten Kugelköpfen
(36, 37) versehener Bolzen (34) ausgebildet sind.

./.

13. Stirnmitnehmer nach einem oder mehreren der Ansprüche 1 bis 12,

d a d u r c h   g e k e n n z e i c h n e t ,

daß die Druckplatte (21''') mit in zwei Ebenen axial hintereinander angeordneten elastisch verformbaren Teilen (Segmente 26, 26', 26'') versehen ist, die gegeneinander versetzt angeordnet sind.

14. Stirnmitnehmer nach einem oder mehreren der Ansprüche 1 bis 13,

d a d u r c h   g e k e n n z e i c h n e t ,

daß die Mitnehmerbolzen (16) jeweils mit einem in diesen eingesetzten elastisch verformbaren Zwischenstück (38) versehen sind.

15. Stirnmitnehmer nach einem oder mehreren der Ansprüche 1 bis 14,

d a d u r c h   g e k e n n z e i c h n e t ,

daß bei auf unterschiedlichen Durchmessern in den Träger (11') eingesetzten Mitnehmerbolzen (16''') diese über ein Ausgleichselement (39) und einem als Kugel ausgebildeten Zwischenglied (33) an der gemeinsamen Druckscheibe (21'') abgestützt sind.

29. Januar 1985   e-1
A 7819

FIG. 1

0201756

0201756

**FIG. 2**

**FIG. 3**

**FIG. 4**

FIG. 5

0201756

FIG. 6

FIG. 7

FIG. 8

0201756